# EUROPÄISCHE PATENTSCHRIFT

(11) **EP 3 872 446 B1**
(45) Veröffentlichungstag und Bekanntmachung des Hinweises auf die Patenterteilung: **17.12.2025**
(21) Anmeldenummer: 21162603.1
(22) Anmeldetag: 17.12.2018
(51) Int. Cl.: G01B 11/245, G01B 11/25

(54) **OPTISCHE MESSEINRICHTUNG**
OPTICAL MEASURING DEVICE
DISPOSITIF DE MESURE OPTIQUE

(30) Priorität: 21.12.2017 DE 102017130909
(43) Veröffentlichungstag der Anmeldung: 01.09.2021
(62) Teilanmeldung aus: 18213005.4
(73) Patentinhaber: Weber Food Technology SE & Co. KG, 35236 Breidenbach (DE)
(72) Erfinder: KÖSTER, Dr. Bernd, 38162 Cremlingen (DE)
(74) Vertreter: Kröncke, Rolf

(56) Entgegenhaltungen:
- DE-A1- 102010 011 217
- DE-A1- 102011 104 550
- DE-A1- 102013 112 260
- DE-A1- 102015 103 373
- DE-T2- 69 628 956
- US-B2- 9 301 626

## Beschreibung

Die Erfindung betrifft eine optische Messeinrichtung zur Ermittlung von Eigenschaften eines Objektes gemäß dem Oberbegriff des Anspruchs 1.

Zur Ermittlung von Objekteigenschaften ist das sogenannte Lichtschnittverfahren bekannt, bei dem z.B. mit einem Laser oder einer Linienbeleuchtung eine Lichtlinie auf die Oberfläche des zu analysierenden Objektes projiziert und das seitliche Bild mit einer Bildaufnahmeeinheit aufgenommen wird. Aus der Form der aktuellen Profillinie kann dann mittels einer entsprechenden Kalibrierung unmittelbar auf die Objekthöhe eines Profilpunktes im aktuellen Schnittbild geschlossen werden.

Wenn sich nun der Objektkörper mit räumlich und zeitlich bekanntem Vorschub unter der Lichtlinie entlang bewegt, kann eine Abfolge von Querschnittsprofilen gewonnen werden, aus denen die zum Bildaufnahmesensor gewandte Oberfläche des Objektkörpers rekonstruiert werden kann. Auf diese Weise kann das Querschnittsprofil von Objekten, die z.B. auf einem Transportband gefördert werden, effizient beim Durchlaufen durch den Lichtvorhang erfasst werden. Bei der bekannten Transportgeschwindigkeit und Aufnahmegeschwindigkeit kann hieraus ein Oberflächenprofil der Objekte erstellt werden. Die Bildaufnahme kann optional auch durch Inkrementalgeberimpulse getriggert werden. Hierdurch werden die Abstände zwischen den Aufnahmen bekannt.

Aus der DE 696 28 956 T2 ist eine Abtastvorrichtung und ein Abtastverfahren bekannt. Aus der DE 10 2011 104 550 A1 ist eine optische Messvorrichtung zur Überwachung einer Fügenaht, ein Fügekopf und ein Laserschweißkopf bekannt. Aus der DE 10 2013 112 260 A1 ist ein Verfahren und eine Vorrichtung zum Erkennen von Fehlstellen von abgelegten Faserhalbzeugen bekannt. Aus der DE 10 2010 011 217 A1 ist ein Verfahren und eine Vorrichtung zur Messung der Profilgeometrie von sphärisch gekrümmten, insbesondere zylindrischen Körpern bekannt. Aus der DE 10 2015 103 373 A1 ist ein Messelement für ein Koordinatenmessgerät bekannt. Aus US 9 301 626 B2 ist eine Profilvermessung von auf einem Transportband bewegten Lebensmitteln bekannt.

Aufgabe der vorliegenden Erfindung ist es, eine verbesserte optische Messeinrichtung zu schaffen, die möglichst kompakt und sicher ist und dabei eine verbesserte Ermittlung von Objekteigenschaften ermöglicht.

Die Aufgabe wird durch die optische Messeinrichtung mit den Merkmalen des Anspruchs 1 gelöst. Vorteilhafte Ausführungsformen sind in den Unteransprüchen beschrieben.

Es wird vorgeschlagen, dass die optische Messeinrichtung eine steuerbare zweite Beleuchtungseinheit hat, die zur Projektion von Licht in einem vorgegebenen Lichtspektrum auf das Objekt ausgebildet ist, sowie eine zweite Bildaufnahmeeinheit zur ortsabhängigen Erfassung des von dem Objekt zurückreflektierten Lichts der zweiten Beleuchtungseinheit. Die optische Messeinrichtung ist zur Ermittlung von dreidimensionalen Oberflächeninformationen des Objektes mittels Lichtschnittes mit der auf das Objekt mit der ersten Beleuchtungseinheit projizierten linienförmigen Markierung sowie zur Ermittlung von Eigenschaften des Objektes aus dem ortsabhängig erfassten Lichtspektrum des von dem Objekt zurückreflektierten Lichts der zweiten Beleuchtungseinheit eingerichtet.

Mit einer solchen kombinierten optischen Messeinrichtung ist es möglich, nicht nur das Querschnittsprofil des Objektes zu erfassen, sondern auch dreidimensionale Oberflächeninformationen, um auf diese Weise zusätzlich zu den 3D-Daten des Querschnittsprofils weitere geometrische Qualitätsmerkmale des Objektes abzuleiten.

Dies gelingt, indem die erste und zweite Beleuchtungseinheit in der optischen Messeinheit miteinander gekoppelt und die Erfassung der auf das Objekt projizierten linienförmigen Markierung mit der ersten Bildaufnahmeeinheit und die ortsabhängige Erfassung der spektralen Lichtinformationen aus dem von dem Objekt zurückreflektierten Licht mit der zweiten Bildaufnahmeeinheit kombiniert wird.

Auf diese Weise werden zusätzlich zu den 3D-Daten zur Ermittlung geometrischer Eigenschaften des Objektes, wie z.B. das Oberflächenprofil, auch Daten von z.B. der optischen Beschaffenheit der Oberfläche oder der Struktur des Objektes aus spektralen Information des zurückreflektierten Lichts gewonnen .

Das Verhalten des Objekts bei Bestrahlung mit spezifischen Lichtfrequenzen wie Ultraviolett- und/oder Infrarot-Licht gibt die Möglichkeit Rückschlüsse auf Produktqualitäten zu liefern. Bei Lebensmitteln können auf diese Weise z.B. Blutstellen, Fremdkörper wie Kunststofffremdkörper oder mit dem Grundmaterial vermengte Zusatzstoffe aufgefunden werden. Kunststofffremdkörper haben beispielsweise im Infrarotlicht besondere Abstrahleigenschaften im Vergleich zum Lebensmittelgrundmaterial wie Fleisch und Käse. Auch andere Inhaltsstoffe verändern oftmals die Reflektion im infraroten oder ultravioletten Bereich, nicht aber die Farbe des Objektes, wenn diese mit dem Grundmaterial vermengt sind.

Die erste und zweite Bildaufnahmeeinheit sind derart aufeinander abgestimmt, dass die ermittelten dreidimensionalen Oberflächeninformationen des Objektes und die ermittelten Eigenschaften des Objektes positionsabhängig auf Objektpunkte des Objektes bezogen sind. Hierzu können die erste und zweite Bildaufnahmeeinheit an einer gemeinsamen Basisplattform der optischen Messeinrichtung angeordnet und aufeinander kalibriert sein.

Die optische Messeinrichtung ist zur Erfassung der Lichtintensität als ortsabhängig erfasstes Lichtspektrum ausgebildet .

Insbesondere geht dies aufgrund der verschiedenen Ansichten, die die Bildaufnahmeeinheit von gleichen Messobjektbereichen aufnimmt und weil damit eine Triangulationsanordnung gegeben ist. Damit wird als spektrale Eigenschaft in diesem einfachsten Fall die unterschiedliche Intensität des zurückgestrahlten Lichtes von den unterschiedlichen Objektpunkten erfasst und zur Ermittlung dreidimensionaler Oberflächeninformationen des Objektes ausgewertet. Die Frequenz des zurückgestrahlten Lichtes selbst muss dabei nicht weiter bewertet werden.

Die zweite Bildaufnahmeeinheit kann aber auch zur spektralsensitiv differenzierenden Erfassung des zurückreflektierten Lichtes der zweiten Beleuchtungseinheit eingerichtet sein. Die optische Messeinrichtung ist dann zur Ermittlung der Eigenschaften des Objektes aus den ortsabhängig erfassten spektralen Lichtinformationen des vom Objekt zurückreflektierten Lichtes ausgebildet. Hierbei wird eine Unterscheidung nach verschiedenen Lichtfrequenzen vorgenommen, um tiefergehende Qualitätsunterscheidungen zu treffen. Durch die spektralsensitive Erfassung des zurückreflektierten Lichtes ist es möglich, Fremdkörper und ihre Ortspositionen auf oder in dem Objekt zu detektieren, die bei der entsprechenden Lichtfrequenz ein für die Eigenschaft spezifisches Reflektionsverhalten zeigen.

Die zweite Beleuchtungseinheit kann zur Projektion von Licht in sichtbaren Lichtspektren, von ultraviolettem Licht, nahem infraroten Licht, fernem infraroten Licht und/oder im Terrahertzspektrum ausgebildet sein. Diese Lichtspektren können einzeln oder in Kombination zusammen oder zeitlich nacheinander zur Beleuchtung des Objektes genutzt werden, um in den ausgewählten Lichtspektren erkennbare Eigenschaften zu detektieren. So könnten Kunststofffremdkörper beispielsweise aus der Reflektion von infrarotem oder ultraviolettem Licht wahrgenommen werden.

Die zweite Bildaufnahmeeinheit kann mehrere jeweils auf das Objekt ausgerichtete Bildaufnahmesensoren zur Erfassung der spektralen Informationen großer spektraler Bereiche, die nicht durch einen Sensor abgedeckt werden können (z.B. gleichzeitig UV, Infrarot und Wärmestrahlung), aufweisen. Die Intensitätsdaten können immer auch zusätzlich aufgrund der verschiedenen Ansichten gleicher Objektpunkte auch zur zusätzlichen Gewinnung von dreidimensionalen Oberflächeninformationen eingesetzt werden, um z.B. auch 3D-Informationen in Sichtschatten des Lichtschnittsensors zu gewinnen, sofern die Oberflächenstruktur hinreichend dafür geeignet ist.

Denkbar ist aber auch eine Verbindung von richtungsabhängigen Bildinformationen eines bildgebenden Sensors mit Daten eines die Geometrie des Objektes bestimmenden Sensors, um damit eine dreidimensionale Bestimmung der Objektpunkte und ihrer spektralen Merkmale vorzunehmen.

Im Strahlengang zwischen dem Objekt und der zweiten Bildaufnahmeeinheit kann ein optisches Element angeordnet sein, das zur spektraldifferenzierenden Umlenkung der von dem Objekt reflektierten Lichtstrahlen der Beleuchtungseinheit auf mindestens einen Sensor der zweiten Bildaufnahmeeinheit ausgebildet ist. Damit kann die spektraldifferenzierte Erfassung von den Merkmalen des Objektes verbessert werden. Bei dieser Ausführungsform kann die Messvorrichtung aus der ersten Bildaufnahmeeinheit, mindestens einer schaltbaren, eine Lichtebene bildende Linienbeleuchtung, einer zusätzlichen, ebenfalls schaltbaren, spektral steuerbaren zweiten Beleuchtungseinheit und der mindestens einen weiteren zweiten Bildaufnahmeeinheit mit geeigneter spektraler Empfindlichkeit sowie aus einem zusätzlichen spektral- und richtungssensitiven, differenzierenden optischen Element gebildet werden. Dieses optische Element fängt die Rückstrahlung, die durch das Licht entsteht, das von der spektral steuerbaren zweiten Beleuchtungseinheit auf das Messobjekt eingestrahlt wird, auf und lenkt dieses spektraldifferenziert auf die mindestens eine weitere zweite Bildaufnahmeeinheit.

Mit einem solchen optischen Element können die erste und zweite Bildaufnahmeeinheit zusammen mit der ersten und zweiten Beleuchtungseinheit auch in einem sehr kompakten Sensor zusammengefasst werden.

Die erste Beleuchtungseinheit, die erste Bildaufnahmeeinheit, die zweite Beleuchtungseinheit und die zweite Bildaufnahmeeinheit können als Einheit in einem gemeinsamen Gehäuse angeordnet sein. Die optische Messeinrichtung ist zur Ermittlung der dreidimensionalen Koordinaten der von der linienförmigen Markierung beleuchteten Objektpunkte der Oberflächenkontur des Objektes und zur Zuordnung von Merkmalsvektoren von Intensitäten der differenzierten unterschiedlichen Lichtfrequenz emittierten Strahlung ausgebildet. Die Erfassung des Objektprofils ist auf diese Weise zusammen mit der ortsaufgelösten Merkmalserfassung des Objektes anhand der spektralen Reflektionsinformation des reflektierten Lichtes in einen gemeinsamen Sensor kombiniert. Hierzu kann die optische Messeinrichtung durch ihre optischen Komponenten und z.B. eine Datenverarbeitungseinheit und ein Computerprogramm, das zur Bildauswertung geeignete Programmcodemittel hat, die auf der Datenverarbeitungseinheit ausgeführt werden, zusammenwirken.

Die erste Beleuchtungseinheit kann zur Projektion von Licht in unterschiedlichen Lichtfrequenzen zeitlich nacheinander oder gleichzeitig eingerichtet sein. So ist es denkbar, dass das Lichtschnittverfahren mit Licht in einem ersten Lichtspektrum durchgeführt werden, während die spektrale Erfassung von Merkmalen mit Hilfe der zweiten Beleuchtungseinheit und der zweiten Bildaufnahmeeinheit mit Licht in einem anderen, zweiten Lichtspektrum durchgeführt wird. Denkbar ist aber auch, dass die erste Beleuchtungseinheit ein breitbandiges Lichtspektrum abstrahlt.

Die erste Beleuchtungseinheit kann mehrere Lichtquellen haben, die auf die Beleuchtungsebene so ausgerichtet sind, dass Lichtstrahlen der mehreren Lichtquellen gebündelt auf gemeinsamen Zielpunkten der Beleuchtungsebene zusammenfallen. Die Lichtlinie wird somit durch mehrere Lichtquellen erzeugt und hat damit eine entsprechend größere Helligkeit als bei einer Nutzung von nur einer Lichtquelle mit gleicher Strahlungsleistung.

Durch die Nutzung von mehreren Laserlichtquellen kann Laserstrahlung mit geringer Intensität genutzt werden, so dass die Gefährdung der Umgebung verringert wird. So können Laser geringer Schutzklassen eingesetzt werden, um dennoch eine Lichtlinie mit ausreichender Helligkeit zu erzeugen als bei Verwendung von nur einer Laserlichtquelle. Dies reduziert den Schutz- und Absicherungsaufwand erheblich. Gleichzeitig entsteht weniger Baugröße, Bauteileaufwand sowie damit auch eine einfachere Bedienung und Reinigung.

Im Strahlengang zwischen Lichtquellen der ersten Beleuchtungseinheit und einer Beleuchtungsebene kann eine Schlitzblende, ein Prisma, eine Linsenoptik und/oder eine Schattenkante zur Bildung einer Linie als Markierung angeordnet sein. Auf diese Weise kann die für das Lichtschnittverfahren notwendige Lichtlinie auf einfache Weise erzeugt werden.

Anstelle von Laserlichtquellen kann auch eine lineare Anordnung von nicht kohärent abstrahlenden Leuchtdioden verwendet werden. Dies hat den Vorteil, dass keine Speckle-Effekte auftreten.

Mit einer in den Strahlengang gesetzten Schlitzblende und/oder mit Prismen oder Linsen, die zusätzlich oder statt einer Schlitzblende verwendet werden, lassen sich ohne signifikante Streuverluste Lichtlinien erzeugen, wobei die Gefahr für die Umgebung reduziert wird.

Ein Problem besteht oftmals darin, die optische Messeinrichtung ohne Abschirmung gegen Fremdlicht einerseits und mit selbst emittiertem Licht andererseits einzusetzen. Dabei soll die optische Messeinrichtung möglichst ohne besondere Schutzvorkehrungen, z.B. vor einem zu nahem Kontakt mit dem Menschen und der damit einhergehenden Gefährdung der Augen durch zu große Lichtstrahlung, eingesetzt werden. Die Laserlichtlinie muss daher immer noch für das Lichtschnittverfahren ausreichend hell sein. Die bei solchen Systemen in der Regel verwendeten Laserlichtquellen sind für die erforderliche Messsicherheit so stark, dass eine Augengefährdung beim Blick in den Messlaser besteht. Daher gelten in der Regel die Schutzklassen 1M oder 2M als tolerabel. Um die notwendige Intensität bereitzustellen, liegen die Schutzklassen aufgrund der üblichen Bauform von Linienlasern oft bei 3R oder sogar noch höher, was eine ungeschützte Verwendung ausschließt.

Zur Lösung dieses Problems wird vorgeschlagen, dass die erste Beleuchtungseinheit der optischen Messeinrichtung mehrere Lichtquellen hat, die auf die Beleuchtungsebene so ausgerichtet sind, dass Lichtstrahlen der mehreren Lichtquellen gebündelt auf gemeinsame Zielpunkte der Beleuchtungsebene zusammenfallen.

Damit lassen sich Lichtquellen einer reduzierten Schutzklasse einsetzen, da eine Gefahr für die Umgebung nicht in dem Zielpunkt besteht, sondern nur beim Blick in eine einzelne Lichtquelle. Die für den Laserschnitt benötigte Lichtleistung wird durch mehrere, d.h. drei, vier oder mehr Lichtquellen bereitgestellt, die jeweils in einem gemeinsamen Zielpunkt zusammengeführt werden. Dieser Zielpunkt ist der zur Projektion der Lichtlinie vorgesehene Projektionspunkt auf der Beleuchtungsebene, d.h. auf dem zu analysierenden Objektpunkt.

Dabei wird ausgenutzt, dass für die Bewertung der Laserschutzklasse die Bewertung der Augengefährdung ausschlaggebend ist. Diese wiederum wird von der Größe des Bildes der scheinbaren Lichtquelle auf der Netzhaut wesentlich beeinflusst. Ein kleineres Bild an der Quelle gleicher Intensität bedeutet auf der Netzhaut eine größere Gefährdung, als ein größeres Bild, das dieselbe Intensität auf der größeren Netzhautfläche verteilt. Somit kann durch gezieltes Vergrößern der Bilder auf der Netzhaut die Gefährdung abgesenkt werden. Dies wird erreicht, indem die Lichtstrahlen mehrerer Lichtquellen reduzierter Lichtintensität im Zielpunkt zusammengeführt werden und dadurch im Zielpunkt die notwendige hohe Intensität aufweisen. Nicht aber beim Blick in die Laserlichtquellen.

Die erste Beleuchtungseinheit kann mehrere Laserlichtquellen haben, deren Laserlichtstrahlen in der Beleuchtungsebene zusammengeführt sind. Die Nutzung von Laserlicht zur Projektion der Lichtlinie für das Lichtschnittverfahren hat den Vorteil, dass der Laser die Laserlichtstrahlen stark bündelt und diese daher gut auf einen Zielpunkt ausgerichtet werden können. Sie haben zudem eine hohe Lichtleistung und sind gut steuerbar.

Denkbar ist aber auch die Nutzung von Lichtquellen, die nicht kohärentes Licht abstrahlen.

Durch die erfindungsgemäße Anwendung des Lichtschnittverfahrens ergibt sich der Vorteil, dass man damit auch in hohe Geschwindigkeitsbereiche bei der Profildichte vorstößt. Zum Beispiel ist eine einfache, schnelle 3D-Auswertung möglich; mit 1.000 Hz und mehr.

Es entstehen keine Probleme, wenn das Objekt - wie üblicherweise Lebensmittel - nicht hinreichend strukturiert ist. Somit ist die erfindungsgemäße Auswertung besser geeignet bei den Materialeigenschaften von Lebensmitteln als der Einsatz von Stereo- oder TOF-Kamerasystemen. Denn bei diesen beiden Systemen sind Entfernungsmessungen z.B. bei Fett und Fleisch im Ergebnis sehr unterschiedlich; insbesondere wegen der unterschiedlichen Eindringtiefe von Licht.

Die Erfindung wird nachfolgend anhand eines Ausführungsbeispiels mit den beigefügten Zeichnungen näher erläutert. Es zeigen:
- Figur 1 -: Skizze einer optischen Messeinrichtung, die auf ein Transportband für Lebensmittelobjekte ausgerichtet ist;
- Figur 2 -: Skizze der optischen Messeinrichtung aus Figur 1.

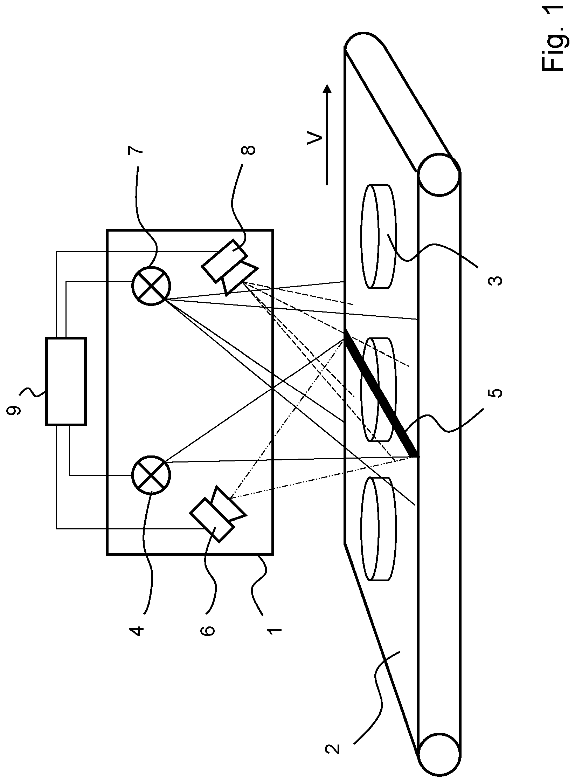

Figur 1 zeigt eine perspektivische Skizze einer optischen Messeinrichtung 1, die auf ein Transportband 2 ausgerichtet ist. Das Transportband 2 trägt Objekte 3, wie beispielsweise Wurst-, Fleisch- oder Käsescheiben, die in eine Vorschubrichtung V transportiert werden.

Die optische Messeinrichtung 1 hat eine erste Beleuchtungseinheit 4 mit mindestens einem Leuchtmittel. Die erste Beleuchtungseinheit 4 ist zur Projektion einer linienförmigen Markierung 5 auf einer Beleuchtungsebene ausgebildet. Die Beleuchtungsebene kann die Oberseite bzw. Oberfläche des Transportbandes 2 sein, auf der die Objekte 3 getragen werden. Denkbar ist aber auch, dass die Beleuchtungsebene durch die Oberseite der von dem Transportband 2 getragenen Objekte 3 definiert wird oder durch eine andere geeignete Ebene.

Die Objekte 3 werden nun in Vorschubrichtung V unter den Strahlengang der ersten Beleuchtungseinheit 4 hindurch transportiert, so dass die linienförmige Markierung 5 auf das Objekt 3 projiziert wird. Durch die dreidimensionale Kontur des Objektes 3 verformt sich die linienförmige Markierung 5, so dass im bekannten Linienschnittverfahren das Höhenprofil des Objektes 3 mit einem Bild ermittelt werden kann, das von einer ersten Bildaufnahmeeinheit 6 von dem Objekt 3 aufgenommen wird. Diese erste Bildaufnahmeeinheit 6 ist somit zur Erfassung der auf das Objekt 3 projizierten linienförmigen Markierung eingerichtet.

Weiterhin hat die optische Messeinrichtung 1 eine zweite Beleuchtungseinheit 7, die mit mindestens einem geeigneten Leuchtmittel zur Projektion von Licht in einem vorgegebenen Lichtspektrum auf das Objekt 3 ausgebildet ist. Dabei erfolgt die Beleuchtung des Objektes 3 und des darunter liegenden Transportbandes 2 nicht eingeschränkt auf eine Linie, sondern wie mit den Beleuchtungs-Projektionsstrahlen angedeutet, auf einer Flächenebene. Es ist eine zweite Bildaufnahmeeinheit 8 vorgesehen, die zur ortsabhängigen Erfassung des von dem Objekt 3 zurückreflektierten Lichts der zweiten Beleuchtungseinheit 7 ausgebildet ist.

Die erste und zweite Beleuchtungseinheit 4, 7 sowie die erste und zweite Bildaufnahmeeinheit 6, 8 werden durch eine geeignet programmierte Datenverarbeitungseinheit 9 angesteuert. Hierbei wird für das Lichtschnittverfahren die erste Beleuchtungseinheit 4 und die erste Bildaufnahmeeinheit 6 aktiviert, um die linienförmige Markierung auf das Objekt 3 zu projizieren und die dreidimensionale Oberflächeninformation des Objektes 3 zu erfassen.

Weiterhin wird gleichzeitig oder alternierend zum Lichtschnittverfahren durch Ansteuerung der zweiten Beleuchtungseinheit 7 und der zweiten Bildaufnahmeeinheit 8 Licht in mindestens einem vorgegebenen Stichspektrum auf das Objekt 3 flächig projiziert. Mit der zweiten Bildaufnahmeeinheit 8 wird nun mindestens ein Bild des Objektes 3, d.h. das von dem Objekt 3 zur zweiten Bildaufnahmeeinheit 8 zurückreflektierte Licht der zweiten Beleuchtungseinheit 7 in dem entsprechenden Lichtspektrum aufgenommen. Anhand dieser zurückreflektierten Lichtinformationen werden aus den aufgenommenen Bildern biometrische und/oder spektrale Eigenschaften des Objektes 3 ermittelt, um damit z.B. korrekt gefertigte Objekte 3 von nicht korrekt gefertigten Objekten 3 zu unterscheiden oder um die Objekte 3 qualitativ einzuordnen.

Die Eigenschaften werden dabei mit der zweiten Bildaufnahmeeinheit 8 ortsabhängig erfasst, wobei ein Bild die gesamte optisch erfassbare Fläche des Objektes 3 aufnehmen kann. Ein schrittweises Abscannen wie bei dem Lichtschnittverfahren ist hierfür nicht erforderlich.

Als spektrale Eigenschaft des Objektes 3 kann mit der zweiten Bildaufnahmeeinheit 8 und der Datenverarbeitungseinheit 9 im einfachsten Fall die unterschiedliche Intensität des zurückgestrahlten (z.B. sichtbaren) Lichtes von den unterschiedlichen Objektpunkten des Objektes 3 verstanden werden. In diesen einfachen Fällen wird die Frequenz des rückgestrahlten Lichtes nicht weiter bewertet.

In vielen Fällen bietet aber die Unterscheidung verschiedener Lichtfrequenzen die Möglichkeit, tiefergehende Qualitätsunterscheidungen zu machen. Hierbei können beispielsweise unerwünschte Verfärbungen der Objekte 3 erkannt werden. **In** diesen Fällen ist die Verwendung von farbigem Licht und/oder farbsensitiven, bildgebenden Sensoren, z.B. auf CCD- oder CMOS-Basis, geeignet. Statt Flächensensorik kann hier alternativ auch eine Erfassung in Streifen- bzw. Linienform erfolgen. Beispielsweise mit einem Matrix-Sensor, bei dem beliebige Auswerteregionen genutzt werden, oder mit einem Zeilensensor.

Auch der Lichtstreifen für die Volumenauswertung durch die erste Beleuchtungseinrichtung kann mit einem speziellen Spektrum erzeugt werden, sodass hierbei dann die Option entsteht, mit beiden Erfassungseinrichtungen nur eine Lichtlinie auszuwerten. Es können aber auch qualitätsmindernde Veränderungen der Oberfläche des Objektes 3 ermittelt werden, die weder geometrisch sind noch den sichtbaren Bereich des Lichtspektrums betreffen. So können für die Bereiche ultraviolettes (UV-), nahes infrarot (IR) und fernes infrarot (IR) Licht sensitive bildgebende Sensoren genutzt werden, die ein richtungsabhängiges orts- und spektralsensitives Bild liefern.

Die richtungsabhängigen Informationen mehrerer bildgebender Sensoren der zweiten Bildaufnahmeeinheit 8 oder die Verbindung von richtungsabhängigen Bildinformationen mit Daten eines die Geometrie bestimmenden Sensors zu einer genauen 3D-Bestimmung der Objektpunkte des Objektes 3 und ihrer spektralen Merkmale können zur Erfassung mit der zweiten Bildaufnahmeeinheit genutzt werden. So kann die zweite Bildaufnahmeeinheit 8 ein oder bevorzugt mindestens zwei Sensoren haben.

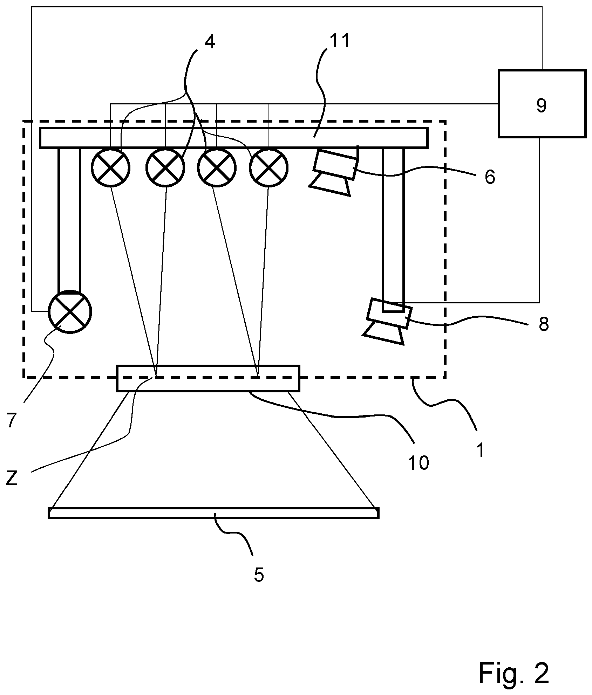

Figur 2 zeigt eine Skizze der optischen Messeinrichtung 1. Zur Beschreibung der zweiten Beleuchtungseinheit 7 und der zweiten Bildaufnahmeeinheit 8 wird auf das Vorhergesagte verwiesen.

Erkennbar ist, dass die erste Beleuchtungseinheit 4 aus mehreren Lichtquellen gebildet ist. Mindestens zwei Lichtquellen sind dabei so ausgebildet, dass ihre Lichtstrahlen gebündelt auf die aus einem gemeinsamen Zielpunkt Z zusammenfallen. Diese Zielpunkte Z können beispielsweise in der Beleuchtungsebene liegen, d.h. in der Ebene der von der ersten Beleuchtungseinheit 4 projizierten linienförmigen Markierung 5. Denkbar ist aber auch wie dargestellt, dass der mindestens eine Zielpunkt Z in einem optischen Element 10 liegt, beispielsweise an der Schlitzblende, einem Bildprisma, einer Linsenoptik oder einer Schattenkante. Dieses optische Element 10 wird dabei genutzt, um die linienförmige Markierung 5 zu bilden.

Damit ist es möglich, die optische Messeinrichtung 1 ohne eine besondere Abschirmung gegen Fremdlicht einerseits und selbst emittiertes Licht andererseits einzusetzen und dennoch bei reduzierter Lichtleistung der Lichtquellen der ersten Beleuchtungseinheit 4 eine linienförmige Markierung 5 mit ausreichender Helligkeit bereitzustellen. Die optische Messeinrichtung 1 kann dabei ohne besondere Schutzvorkehrungen vor einem zu nahen Kontakt mit dem Menschen betrieben werden. Dies ist hilfreich z.B. wenn wenig Bauraum zur Verfügung steht oder eine Notwendigkeit häufiger Eingriffe in die jeweiligen Abläufe durch einen Menschen besteht. Die Lichtleistung der einzelnen Lichtquellen kann durch die Bündelung in einem Zielpunkt Z im Vergleich zur Nutzung jeweils einer Lichtquelle pro Zielpunkt Z reduziert werden. Die Augengefährdung beim Blick in die Lichtquellen der ersten Beleuchtungseinheit 4 wird hierdurch reduziert.

Deutlich wird, dass die erste Beleuchtungseinheit 4 und die erste Bildaufnahmeeinheit 6 ebenso wie die zweite Beleuchtungseinheit 7 und die zweite Bildaufnahmeeinheit 8 in bekannter, räumlicher Anordnung zueinander an einer gemeinsamen Basisstruktur angebracht sind. Die optische Messeinrichtung 1 ist auf diese Weise zu einem (kompakten) Sensor zusammengefasst und ermöglicht eine ortsaufgelöste Bildauswertung gegebenenfalls nach einer Kalibrierung.

Bei der Realisierung in Form eines Kompaktsensors mit einem oder mehreren zusätzlichen Farbbildsensoren können diese mit einer Triangulationsanordnung über eine Kalibrierung so in Verbindung miteinander gebracht werden, dass die über das Lichtschnittverfahren bestimmten 3D-Oberflächeninformationen mit zusätzlichen Informationen über die Farbe, Lichtintensität, Mustern und flächigen Farbtexturen versehen werden können.

Bei der Realisierung in Form eines Kompaktsensors unter Verwendung von mindestens einem spektral im infraroten oder ultravioletten Frequenzbereich empfindlichen Sensor können die Bildaufnahmeeinheiten 6, 8 mit einer Triangulationsanordnung über eine Bildregistrierung so in Verbindung miteinander gebracht werden, dass die über das Lichtschnittverfahren bestimmten 3D-Oberflächeninformationen mit zusätzlichen Informationen über die spektralen Rückstrahlungen verbunden werden.

Deutlich wird, dass die optische Messeinrichtung 1 geeignet ist, um die genauen 3D-Koordinaten der von der Lichtebene getroffenen, im Sichtbereich befindlichen Konturenpunkte zu messen, sodass jedem Konturenpunkt ein Merkmalsvektor von Intensitäten der emittierten Strahlung zugeordnet werden kann, die unterschiedlichen differenzierten Frequenzen entsprechen. Diese Lichtfrequenzen können dabei nacheinander oder gleichzeitig angeschaltet werden.

Mit der optischen Messeinrichtung 1 wird ein normales Farbgrauwertbild oder ein spektrales Bild des betreffenden Objektes 3 mit den 3D-Daten des Lichtschnittverfahrens verbunden. Hierzu ist die aus der ersten Beleuchtungseinheit 4 und der zweiten Bildaufnahmeeinheit 6 gebildete Lichtschnittanordnung über eine Art von zusätzlichen Farbbildsensor oder anderweitig spektral empfindlichen Sensor über eine Bildregistrierung so verkoppelt, dass jedem Profilpunkt ein spektraler Inhalt zugeordnet werden kann. Diese spektral spezifischen Oberflächeneigenschaften lassen in Verbindung mit den geometrischen Eigenschaften und Positionen wesentlich weitergehende Rückschlüsse auf Qualitätseigenschaften des Objektes 3 zu, welche die Inhaltsstoffe und/oder die nicht geometrischen Oberflächenveränderungen des Objektes 3 betreffen. Diese nicht geometrischen Effekte können im Rahmen einer Qualitätskontrolle gleichzeitig und positionsgenau auf dem betreffenden Körper des Objektes 3 bestimmt werden. Hierzu ist lediglich eine entsprechende Kalibrierung der optischen Messeinrichtung 1 als Ganzes notwendig. Der Durchstoß des Lichtstrahls durch die Oberfläche des gemessenen Objektes 3 liefert dann die genaue Position für die spezielle Lichtemission und damit für die zugeordnete Qualitätseigenschaft. Die zusätzlichen, integrierten Sensoren können durch die Bildregistrierung bei gut strukturierten Objekten 3 auch geometrischen Informationen aus den Bereichen liefern, die im Sichtschatten der Lichtschnittebene liegen. Die Verwendung eines weiteren Lichtschnittsensors oder eines Lichtschnittsensors, bei dem auf beiden Seiten des Lichtvorhanges ein bildgebender Sensor sitzt, ist für die vorliegende optische Messeinrichtung 1 nicht erforderlich.

## Patentansprüche

1. Vorrichtung mit Objekten (3) in Form von Lebensmitteln wie Wurst-, Fleisch- oder Käsescheiben und mit einer optischen Messeinrichtung (1), die ein Transportband (2) hat, auf dem die Objekte (3) in Form von Lebensmitteln wie Wurst-, Fleisch- oder Käsescheiben vorbeigeführt werden, wobei die optische Messeinrichtung (1) zur Ermittlung von Eigenschaften der auf dem Transportband (2) vorbeigeführten Objekte (3) in Form von Lebensmitteln wie Wurst-, Fleisch- oder Käsescheiben eingerichtet ist, mit:
- einer ersten Beleuchtungseinheit (4), die zur Projektion einer linienförmigen Markierung (5) auf einer Beleuchtungsebene ausgebildet ist,
- einer ersten Bildaufnahmeeinheit (6) zur Erfassung der auf das Objekt (3) projizierten linienförmigen Markierung (5),
- einer steuerbaren zweiten Beleuchtungseinheit (7), die zur Projektion von Licht in einem vorgegebenen Lichtspektrum auf das Objekt (3) ausgebildet ist, und
- einer zweiten Bildaufnahmeeinheit (8) zur ortsabhängigen Erfassung des von dem Objekt (3) zurückreflektierten Lichts der zweiten Beleuchtungseinheit (7),
wobei die optische Messeinrichtung (1) zur Ermittlung von dreidimensionalen Oberflächeninformationen des Objektes (3) in Form einer rekonstruierten Oberfläche des Objekts (3) mittels Lichtschnittes mit der auf das Objekt (3) mit der ersten Beleuchtungseinheit (4) projizierten linienförmigen Markierung (5) und einer daraus gewonnenen Abfolge von Querschnittsprofilen des Objekts (3) sowie zur Ermittlung von Eigenschaften des Objektes (3) aus dem ortsabhängig erfassten Lichtspektrum des von dem Objekt (3) zurückreflektierten Lichts der zweiten Beleuchtungseinheit (7) eingerichtet ist, **dadurch gekennzeichnet, dass** die optische Messeinrichtung (1) dazu eingerichtet ist, anhand der ermittelten Eigenschaften des Objektes (3) Fremdkörper darin zu erkennen, wobei
- die erste und zweite Bildaufnahmeeinheit (6, 8) derart aufeinander abgestimmt sind, dass die ermittelten dreidimensionalen Oberflächeninformationen des Objektes (3) und die ermittelten Eigenschaften des Objektes (3) positionsabhängig auf Objektpunkte des Objektes (3) bezogen sind,
- die optische Messeinrichtung (1) dazu eingerichtet ist, ein normales Farbgrauwertbild oder ein spektrales Bild des betreffenden Objektes (3) mit den 3D-Daten des Lichtschnittverfahrens zu verbinden, wozu die aus der ersten Beleuchtungseinheit (4) und der ersten Bildaufnahmeeinheit (6) gebildete Lichtschnittanordnung über eine Art von zusätzlichen Farbbildsensor oder anderweitig spektral empfindlichen Sensor über eine Bildregistrierung so verkoppelt ist, so dass jedem Profilpunkt ein spektraler Inhalt zugeordnet werden kann.

2. Optische Messeinrichtung (1) nach Anspruch 1, **dadurch gekennzeichnet, dass** die optische Messeinrichtung (1) zur Erfassung der Lichtintensität als ortsabhängig erfasstes Lichtspektrum ausgebildet ist.

3. Optische Messeinrichtung (1) nach einem der Ansprüche 1 bis 2, **dadurch gekennzeichnet, dass** die zweite Bildaufnahmeeinheit (8) zur spektralsensitiven differenzierenden Erfassung des zurückreflektierten Lichts der zweiten Beleuchtungseinheit (8) eingerichtet ist und die optische Messeinrichtung (1) zur Ermittlung der Eigenschaften des Objektes (3) aus den mehreren ortsabhängig erfassten spektralen Lichtinformationen des vom Objekt (3) zurückreflektierten Lichts ausgebildet ist.

4. Optische Messeinrichtung (1) nach einem der vorhergehenden Ansprüche, **dadurch gekennzeichnet, dass** die zweite Beleuchtungseinheit (7) zur Projektion von Licht in sichtbaren Lichtspektren, von ultraviolettem Licht, nahem infrarotem Licht, fernem infrarotem Licht und/oder im Terahertzspektrum ausgebildet ist.

5. Optische Messeinrichtung (1) nach einem der vorhergehenden Ansprüche, **dadurch gekennzeichnet, dass** die zweite Bildaufnahmeeinheit (8) mehrere jeweils auf das Objekt (3) ausgerichtete Bildaufnahmesensoren zur dreidimensionalen Bestimmung der Lichtreflexion an Objektpunkten des Objektes (3) aufweist.

6. Optische Messeinrichtung (1) nach einem der vorhergehenden Ansprüche, **dadurch gekennzeichnet, dass** im Strahlengang zwischen dem Objekt (3) und der zweiten Bildaufnahmeeinheit (8) ein optisches Element angeordnet ist, das zur spektraldifferenzierenden Umlenkung der von dem Objekt reflektierten Lichtstrahlen der Beleuchtungseinheit auf mindestens einen Sensor der zweiten Bildaufnahmeeinheit ausgebildet ist.

7. Optische Messeinrichtung (1) nach einem der vorhergehenden Ansprüche, **dadurch gekennzeichnet, dass** die erste Beleuchtungseinheit (4), die erste Bildaufnahmeeinheit (6), die zweite Beleuchtungseinheit (7) und die zweite Bildaufnahmeeinheit (8) als Einheit in einem gemeinsamen Gehäuse angeordnet sind, und dass die optische Messeinrichtung (1) zur Ermittlung der dreidimensionalen Koordinaten der von der linienförmigen Markierung beleuchteten Objektpunkte der Oberflächenkontur des Objektes (3) und zur Zuordnung von Merkmalsvektoren von Intensitäten der in differenzierten unterschiedlichen Lichtfrequenzen emittierten Strahlung ausgebildet ist.

8. Optische Messeinrichtung (1) nach einem der vorhergehenden Ansprüche, **dadurch gekennzeichnet, dass** die erste Beleuchtungseinheit (4) zur Projektion von Licht in unterschiedlichen Lichtfrequenzen zeitlich nacheinander oder gleichzeitig eingerichtet ist.

9. Optische Messeinrichtung (1) nach einem der vorhergehenden Ansprüche, **dadurch gekennzeichnet, dass** die erste Beleuchtungseinheit (4) mehrere Lichtquellen hat, die so ausgerichtet sind, dass Lichtstrahlen der mehreren Lichtquellen gebündelt auf gemeinsamen Zielpunkten (Z) zusammenfallen.

10. Optische Messeinrichtung (1) nach einem der vorhergehenden Ansprüche, **dadurch gekennzeichnet, dass** die erste Beleuchtungseinheit (4) mehrere Lichtquellen hat, die so ausgerichtet sind, dass Lichtstrahlen der mehreren Lichtquellen gebündelt auf gemeinsamen Zielpunkten (Z) zusammenfallen.

11. Optische Messeinrichtung (1) nach einem der vorhergehenden Ansprüche, **dadurch gekennzeichnet, dass** die erste Beleuchtungseinheit (4) mehrere Laserlichtquellen hat, deren Laserlichtstrahlen in der Beleuchtungsebene zusammengeführt sind.

12. Optische Messeinrichtung (1) nach einem der vorhergehenden Ansprüche, **dadurch gekennzeichnet, dass** im Strahlengang zwischen den Lichtquellen der ersten Beleuchtungseinheit (4) und der Beleuchtungsebene eine Schlitzblende, ein Prisma, eine Linsenoptik und/oder eine Schattenkante zur Bildung der linienförmigen Markierung (5) angeordnet ist.

## Claims

1. Device with objects (3) in the form of food such as slices of sausage, meat, or cheese, and with an optical measurement device (1) that has a conveyor belt (2) on which the objects (3) in the form of food such as slices of sausage, meat, or cheese are conveyed, whereby the optical measurement device (1) is designed to determine properties of the objects (3) conveyed on the conveyor belt (2) in the form of food such as slices of sausage, meat, or cheese, comprising:
- A first lighting unit (4) that is designed to project a line-shaped marking (5) onto a lighting plane,
- A first imaging unit (6) for capturing the line-shaped marking (5) projected onto the object (3),
- A controllable second lighting unit (7) designed to project light in a predefined light spectrum onto the object (3),
- A second imaging unit (8) for spatially dependent capturing of the light reflected back from the object (3) by the second lighting unit (7),
wherein the optical measurement device (1) is designed to determine three-dimensional surface information of the object (3) in the form of a reconstructed surface of the object (3) using light sectioning with the line-shaped marking (5) projected onto the object (3) by the first lighting unit (4) and a sequence of cross-sectional profiles of the object (3) obtained therefrom, and to determine properties of the object (3) from the spatially dependent light spectrum of the reflected light from the object (3) by the second lighting unit (7), **characterized in that** the optical measurement device (1) is designed to detect foreign bodies within the object (3) based on the determined properties, wherein:
- The first and second imaging units (6, 8) are coordinated such that the determined three-dimensional surface information of the object (3) and the determined properties of the object (3) are positionally related to object points of the object (3),
- The optical measurement device (1) is designed to combine a normal grayscale image or spectral image of the respective object (3) with the 3D data from the light sectioning method, wherein the light sectioning arrangement formed by the first lighting unit (4) and the first imaging unit (6) is coupled via a type of additional color image sensor or otherwise spectrally sensitive sensor through image registration, so that a spectral content can be assigned to each profile point.

2. Optical measurement device (1) according to claim 1, **characterized in that** the optical measurement device (1) is designed to capture the light intensity as a spatially dependent light spectrum.

3. Optical measurement device (1) according to any of claims 1 or 2, **characterized in that** the second imaging unit (8) is designed for spectrally sensitive, differentiating capture of the reflected light from the second lighting unit (8) and that the optical measurement device (1) is designed to determine the properties of the object (3) from the multiple spatially dependent captured spectral light information of the reflected light from the object (3).

4. Optical measurement device (1) according to any of the preceding claims, **characterized in that** the second lighting unit (7) is designed to project light in visible light spectra, ultraviolet light, near-infrared light, far-infrared light, and/or in the terahertz spectrum.

5. Optical measurement device (1) according to any of the preceding claims, **characterized in that** the second imaging unit (8) has multiple imaging sensors, each oriented towards the object (3) for the three-dimensional determination of light reflection at object points of the object (3).

6. Optical measurement device (1) according to any of the preceding claims, **characterized in that** an optical element is arranged in the light path between the object (3) and the second imaging unit (8), designed for spectrally differentiating redirection of the reflected light rays from the object to at least one sensor of the second imaging unit.

7. Optical measurement device (1) according to any of the preceding claims, **characterized in that** the first lighting unit (4), the first imaging unit (6), the second lighting unit (7), and the second imaging unit (8) are arranged as a unit in a common housing, and that the optical measurement device (1) is designed to determine the three-dimensional coordinates of the object points of the surface contour of the object (3) illuminated by the line-shaped marking and to assign feature vectors of the intensities of the radiation emitted in differentiated different light frequencies.

8. Optical measurement device (1) according to any of the preceding claims, **characterized in that** the first lighting unit (4) is designed to project light in different light frequencies either sequentially or simultaneously.

9. Optical measurement device (1) according to any of the preceding claims, **characterized in that** the first lighting unit (4) has multiple light sources arranged such that the light beams from the multiple light sources converge on common target points (Z).

10. Optical measurement device (1) according to any of the preceding claims, **characterized in that** the first lighting unit (4) has multiple light sources arranged such that the light beams from the multiple light sources converge on common target points (Z).

11. Optical measurement device (1) according to any of the preceding claims, **characterized in that** the first lighting unit (4) has multiple laser light sources, the laser light beams of which are converged in the lighting plane.

12. Optical measurement device (1) according to any of the preceding claims, **characterized in that** a slit aperture, a prism, a lens optical system, and/or a shadow edge is arranged in the light path between the light sources of the first lighting unit (4) and the lighting plane to form the line-shaped marking (5).

## Revendications

1. Dispositif muni d'objets (3) sous forme de denrées alimentaires, telles que des tranches de saucisson, de viande ou de fromage, et d'un dispositif de mesure optique (1) qui comporte une bande transporteuse (2) sur laquelle passent les objets (3) sous forme de denrées alimentaires, telles que des tranches de saucisson, de viande ou de fromage, le dispositif de mesure optique (1) étant conçu pour déterminer les propriétés des objets (3) sous forme de denrées alimentaires, telles que des tranches de saucisson, de viande ou de fromage, qui passent sur la bande transporteuse (2), comprenant :
- une première unité d'éclairage (4) conçue pour projeter un marquage linéaire (5) sur un plan d'éclairage,
- une première unité de prise de vue (6) pour détecter le marquage linéaire (5) projeté sur l'objet (3),
- une deuxième unité d'éclairage (7) commandable conçue pour projeter de la lumière dans un spectre lumineux prédéfini sur l'objet (3), et
- une deuxième unité de prise de vue (8) pour détecter, en fonction de l'emplacement, la lumière de la deuxième unité d'éclairage (7) réfléchie par l'objet (3),
le dispositif de mesure optique (1) étant conçu pour déterminer des informations tridimensionnelles, relatives à la surface de l'objet (3), sous la forme d'une surface reconstruite de l'objet (3) au moyen d'une coupe optique avec le marquage linéaire (5), projeté sur l'objet (3) à l'aide de la première unité d'éclairage (4), afin d'en obtenir une succession de profils transversaux de l'objet (3), ainsi que pour déterminer les propriétés de l'objet (3) à partir du spectre lumineux, détecté en fonction de l'emplacement, de la lumière de la deuxième unité d'éclairage (7) réfléchie par l'objet (3),
**caractérisé en ce que** le dispositif de mesure optique (1) est conçu pour détecter, à l'aide des propriétés déterminées de l'objet (3), des corps étrangers présents dans ce dernier,
sachant que
- les première et deuxième unités de prise de vue (6, 8) sont coordonnées de telle sorte que les informations tridimensionnelles déterminées de la surface de l'objet (3) et les propriétés déterminées de l'objet (3) se rapportent à des points de l'objet (3) en fonction de leur position,
- le dispositif de mesure optique (1) est conçu pour associer une image normale en niveaux de gris ou une image spectrale de l'objet concerné (3) aux données 3D du procédé de coupe optique, l'ensemble de coupe optique formé par la première unité d'éclairage (4) et par la première unité de prise de vue (6) étant couplé à un type de capteur d'image couleur supplémentaire ou à un autre capteur sensible au spectre via un enregistrement d'image, de manière à permettre d'attribuer un contenu spectral à chaque point du profil.

2. Dispositif de mesure optique (1) selon la revendication 1,
**caractérisé en ce que** le dispositif de mesure optique (1) est conçu pour détecter l'intensité lumineuse sous forme de spectre lumineux détecté en fonction de l'emplacement.

3. Dispositif de mesure optique (1) selon l'une des revendications 1 à 2,
**caractérisé en ce que** la deuxième unité de prise de vue (8) est conçue pour la détection différenciée, sensible au spectre, de la lumière réfléchie, provenant de la deuxième unité d'éclairage (8), et **en ce que** le dispositif de mesure optique (1) est conçu pour déterminer les propriétés de l'objet (3) à partir des multiples informations spectrales, détectées en fonction de l'emplacement, de la lumière réfléchie par l'objet (3).

4. Dispositif de mesure optique (1) selon l'une des revendications précédentes,
**caractérisé en ce que** la deuxième unité d'éclairage (7) est conçue pour projeter de la lumière dans les spectres lumineux visibles, de la lumière ultraviolette, de la lumière infrarouge proche, de la lumière infrarouge lointaine et/ou dans le spectre térahertz.

5. Dispositif de mesure optique (1) selon l'une des revendications précédentes,
**caractérisé en ce que** la deuxième unité de prise de vue (8) comporte plusieurs capteurs de prise de vue orientés vers l'objet (3) pour déterminer en trois dimensions la réflexion de la lumière en des points de l'objet (3).

6. Dispositif de mesure optique (1) selon l'une des revendications précédentes,
**caractérisé en ce qu'**un élément optique est disposé dans le chemin optique entre l'objet (3) et la deuxième unité de prise de vue (8), lequel élément est conçu pour dévier, de manière différenciée selon le spectre, les rayons lumineux provenant de l'unité d'éclairage, réfléchis par l'objet, vers au moins un capteur de la deuxième unité de prise de vue.

7. Dispositif de mesure optique (1) selon l'une des revendications précédentes,
**caractérisé en ce que** la première unité d'éclairage (4), la première unité de prise de vue (6), la deuxième unité d'éclairage (7) et la deuxième unité de prise de vue (8) sont disposées comme une unité dans un boîtier commun, et **en ce que** le dispositif de mesure optique (1) est conçu pour déterminer les coordonnées tridimensionnelles des points de l'objet (3) éclairés par le marquage linéaire sur le contour de la surface de l'objet (3) et pour attribuer des vecteurs caractéristiques aux intensités du rayonnement émis à différentes fréquences lumineuses différenciées.

8. Dispositif de mesure optique (1) selon l'une des revendications précédentes,
**caractérisé en ce que** la première unité d'éclairage (4) est conçue pour projeter de la lumière à différentes fréquences lumineuses successivement ou simultanément dans le temps.

9. Dispositif de mesure optique (1) selon l'une des revendications précédentes,
**caractérisé en ce que** la première unité d'éclairage (4) comporte plusieurs sources de lumière qui sont orientées de telle sorte que les rayons lumineux desdites plusieurs sources de lumière convergent en un faisceau sur des points cibles communs (Z).

10. Dispositif de mesure optique (1) selon l'une des revendications précédentes,
**caractérisé en ce que** la première unité d'éclairage (4) comporte plusieurs sources de lumière qui sont orientées de telle sorte que les rayons lumineux desdites plusieurs sources de lumière convergent en un faisceau sur des points cibles communs (Z).

11. Dispositif de mesure optique (1) selon l'une des revendications précédentes,
**caractérisé en ce que** la première unité d'éclairage (4) comporte plusieurs sources de lumière laser dont les rayons laser sont réunis dans le plan d'éclairage.

12. Dispositif de mesure optique (1) selon l'une des revendications précédentes,
**caractérisé en ce qu'**un diaphragme à fente, un prisme, une optique à lentilles et/ou un bord d'ombre sont disposés dans le chemin optique entre les sources de lumière de la première unité d'éclairage (4) et le plan d'éclairage, afin de former le marquage linéaire (5).
